# EUROPEAN PATENT SPECIFICATION

(11) **EP 2 694 266 B1**
(45) Date of publication and mention of the grant of the patent: **05.08.2015**
(21) Application number: 12722512.6
(22) Date of filing: 28.03.2012
(51) Int. Cl.: B29C 43/24, B29C 43/58, B29D 30/30

(54) **HOT LAMINATION OF A MULTILAYER OF ELASTOMERIC AND REINFORCEMENT RIBBONS**
HEISSLAMINIERUNG EINER MEHRFACHSCHICHT AUS ELASTOMER- UND VERSTÄRKUNGSBÄNDERN
STRATIFICATION À CHAUD D'UN ÉLÉMENT MULTICOUCHE DE RUBANS EN ÉLASTOMÈRE ET DE RENFORCEMENT

(30) Priority: 06.04.2011 IT MI20110560
(43) Date of publication of application: 12.02.2014
(73) Proprietor: Comerio Ercole S.p.A., 21052 Busto Arsizio (Varese) (IT)
(72) Inventor: LUALDI, Renato, I-21052 Busto Arsizio VA (IT)
(74) Representative: Spina, Alessandro
(86) International application number: PCT/IB2012/051481
(87) International publication number: WO 2012/137105

(56) References cited:
- EP-A1- 0 530 673
- EP-A1- 1 795 324
- DATABASE WPI Week 200709 Thomson Scientific, London, GB; AN 2007-085973 XP002663396, -& JP 2006 297833 A (INOAC CORP KK) 2 November 2006 (2006-11-02)
- DATABASE WPI Week 199029 Thomson Scientific, London, GB; AN 1990-221709 XP002663397, -& JP 2 151426 A (SUMITOMO RUBBER IND LTD) 11 June 1990 (1990-06-11)

## Description

The present invention generally relates to the coupling between reinforcement ribbons made of a textile material and elastomeric ribbons by hot lamination and to the related manufacturing lines of tyres and similar products.

More particularly, the invention relates to a hot lamination method, calender and apparatus with an automatic control of the thickness of multilayers comprising elastomeric ribbons and reinforcement ribbons made of a textile material.

In the manufacturing of multilayer products made of rubber or other elastomeric materials reinforced with high strength textile ribbons, which are typically used for the manufacturing of vehicle tyres, hot lamination processes are generally employed wherein elastomeric ribbons are coupled by heating with reinforcement ribbons made of a high strength textile material by way of suitable calenders provided with pairs of counter-rotating cylinders having parallel axes. The calenders comprise heating members, temperature sensors, as well as a temperature control system suitable to adjust the temperature at the surfaces of the cylinders.

Elastomeric and textile ribbons are continuously fed towards a lamination gap defined between one or more pairs of cylinders of the calender, the height of which may be adjusted by operating a movable cylinder of the pair.

In hot lamination calenders the position of the movable cylinder relative to a fixed cylinder of the same pair of cylinders is adjusted according to the thickness of the multilayer to be manufactured. In order to keep this distance constant, and thus to keep the thickness of the multilayer constant, position control systems are generally employed wherein one or more hydraulic actuators are associated with the shaft supporting the movable cylinder of the calender. The position of the shaft of the movable cylinder, thus the height of the lamination gap, is detected in real time by a position sensor that allows to adjust in a closed loop mode the height of the gap by operating the hydraulic actuators through a suitable control system. The position control system can thus react in real time whenever the height of the lamination gap varies due to unevenness in the thickness of the ribbons that are coupled to form the multilayer.

An example of a control system for adjusting the position of the movable cylinder of a calender in a hot lamination apparatus is disclosed in the European patent application 1795324 in the applicant's name.

Laminating overlapped ends of strips is known from JP-A-2006 297 833. EP-A-0 530 673 discloses detecting overlapped ends of strips.

The position control of the cylinders of a hot lamination calender is generally rather efficient, but has some drawbacks. Whereas elastomeric ribbons may be continuously fed towards the lamination calender, e.g. from a mixer apparatus, reinforcement textile ribbons are generally products manufactured in rolls having a finite length, therefore the tail end portion of the ribbon of a roll must be joined to the front end portion of the ribbon of a new roll.

In order to ensure continuity in the feeding of elastomeric and reinforcement textile ribbons, upstream of the lamination calender an accumulation unit for the reinforcement textile ribbon is generally arranged, thus making available an amount, i.e. a length, of reinforcement textile ribbon for a predefined period of time e.g. comprised between 2 and 4 minutes at the feeding speed through the calender, which is sufficient to make a splice at the end tail portion of each textile ribbon roll.

The splice is generally made by arranging the tail end portion of the finished roll and the front end portion of the new roll face to face and pressing on them on both faces of the textile ribbon a pair of segments of a thin elastomeric film. Splices so made are typically tracts of a small length spaced in the longitudinal direction of the multilayer and having a thickness higher than the thickness of the reinforcement textile ribbon. Therefore, in the feeding direction the textile reinforcement ribbon has periodical splices consisting of a thickened tract having a leading edge and a trailing edge.

During the hot lamination process, when a splice reaches the counter-rotating cylinders of the hot lamination calender, the thickness variation generates an impulse-like disturbance with a substantially rectangular shape on the hydraulic position control system, which lasts until the splice has crossed the lamination gap. This disturbance is managed in real time by the control system, but generates a transitory variation in the pressure of the supply circuit of the hydraulic actuators, which results in an uneven thickness in the finished multilayer not only at the splice between textile ribbons, but also along a portion of the multilayer downstream of the splice relative to the movement or lamination direction of the multilayer. This causes an increase in production waste.

In addition to this, from a mechanical point of view the passage of splices between textile fabrics through the lamination gap generates an impact against the cylinders of the calender, which may damage them and break the multilayer as well. This may also lead to an increase in production waste, because defective portions of the multilayer cannot be used in subsequent manufacturing steps.

There is therefore a need for improving thickness control methods in the manufacturing by hot lamination processes of multiplayer products comprising elastomeric ribbons coupled with reinforcement textile ribbons in order to minimize their production waste, which is an object of the present invention.

It is also an object of the present invention to prevent hot laminated multilayer products from being damaged or broken when splices between reinforcement textile ribbons pass through the lamination gap.

An idea of solution underlying the present invention is to change the control mode of the hydraulic positioning system of the movable cylinder of a hot lamination calender before and during the passage of a splice through the lamination gap. The control mode is switched from a position control mode, operating on the pressure in the supply circuit of the hydraulic actuators, to a pressure control mode, so as to temporarily interrupt the control of the height of the lamination gap and to control, in particular to minimize, pressure variations in the hydraulic circuit of the hydraulic actuators caused by the passage of a splice through the lamination gap. In other words, thanks to this aspect it is possible to switch from a system characterized by an infinite rigidity, which is the one based on the position control, to a system having a variable rigidity, which is suitable to damp fluctuations of the movable cylinder much more rapidly and thus to reduce thickness unevenness in the hot laminated multilayer.

The pressure control mode allows to temporarily introduce a damper in the system, which is suitable to effectively and quickly absorb vibrations caused by the passage of the splice between the cylinders of the calender.

The temporary pressure control further allows to effectively absorb the shocks generated by the passage of the splices through the lamination gap, thus avoiding partial or total breaks of the cylinders, as well as of the multilayer.

In order to switch the control system from a position to a pressure control mode in a short time, a sensor is used, e.g. an optical or mechanical sensor, suitable to automatically detect incoming splices upstream of the lamination gap relative to the movement direction of the layers of the multilayer. Once a splice has been detected, the sensor generates an alarm signal which, through suitable circuit means, switches the control system to the pressure control mode for a time sufficient to ensure that the splice has crossed the lamination gap. The time may be established by the control system as a function of the moving speed of the ribbons and of the length of the splices.

Another advantage offered by the invention is that big and expensive structural changes of a calender of a hot lamination apparatus are not required to switch the control system to the pressure control mode, there being only needed a control software suitable to manage the two control modes and a sensor suitable to detect the passage of the splices.

Further advantages and features of the hot lamination method, calender and apparatus according to the present invention will become clear to those skilled in the art from the following detailed and non-limiting description of an embodiment thereof with reference to the attached drawings, wherein:
- figures 1 and 2 are a front and a side view, respectively, schematically showing a calender of a hot lamination apparatus according to the invention;
- figure 3 is a top view schematically showing the calender of the hot lamination apparatus of figures 1 and 2;
- figure 4 is a partial cross-sectional view taken along line IV-IV of figure 3, which schematically shows the position control system of the movable cylinder of the calender of the hot lamination apparatus according to the invention; and
- figure 5 is a chart showing the trend over time of the supply pressure of the hydraulic actuators of the control system at the passage of a splice between reinforcement textile ribbons, together with the trend over time of the height of the lamination gap.

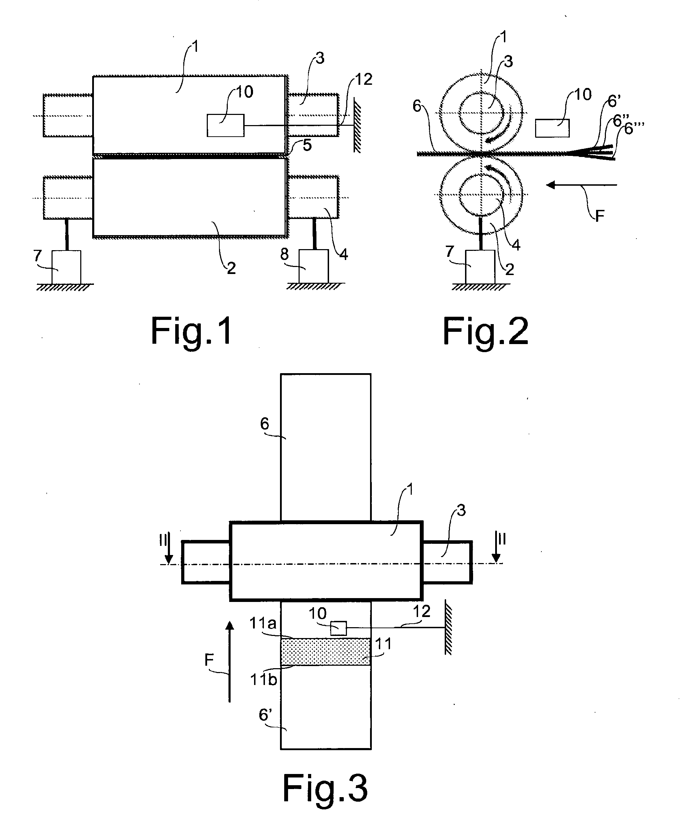

Figures 1 to 4 schematically show a calender of a hot lamination apparatus, the calender comprising a pair of cylinders 1, 2 parallel to each other and respectively rotatably mounted on shafts 3, 4 suitable to be rotated in opposite ways. A gap 5 suitable to allow passage of a plurality of superimposed layers intended to form a multilayer product 6 is present between the cylinders 1, 2. The layers typically comprise at least one ribbon made of rubber or of another elastomeric material and at least one reinforcement ribbon made of a textile material. In the embodiment shown in the drawings, the multiplayer 6 is comprised of three layers 6', 6", 6"', wherein the outer layers 6', 6" are ribbons made of an elastomeric material and the inner layer 6" is a ribbon made of a reinforcement textile material.

The elastomeric layers may be manufactured by suitable mixers and subsequently fed towards the lamination apparatus. Alternatively, the elastomeric layers may be manufactured directly by the lamination apparatus, which in this case comprises suitable feeding cylinders, e.g. two cylinders respectively feeding the outer layers 6' and 6"' and arranged proximate to the cylinders 1, 2 defining the lamination gap 5. This configuration of the lamination apparatus is extremely compact and allows to optimize spaces in the manufacturing line of the multilayer product 6.

During the operation of the lamination apparatus, the cylinders 1, 2 are suitably heated by a heating unit (not shown) and the layers 6', 6", 6"' are fed towards them thus crossing the lamination gap 5. The movement direction of the layers is schematically indicated by arrow F in figures 2 and 3. The layers 6', 6", 6"' are pressed at the lamination gap 5, thus providing the multilayer 6 with the desired thickness.

The height of the gap 5 is set according to the desired thickness of the multilayer 6 and kept constant during operation of the lamination apparatus by way of a position control system comprising one or more hydraulic actuators associated with the shaft of a movable cylinder of the pair of cylinders 1, 2 of the calender.

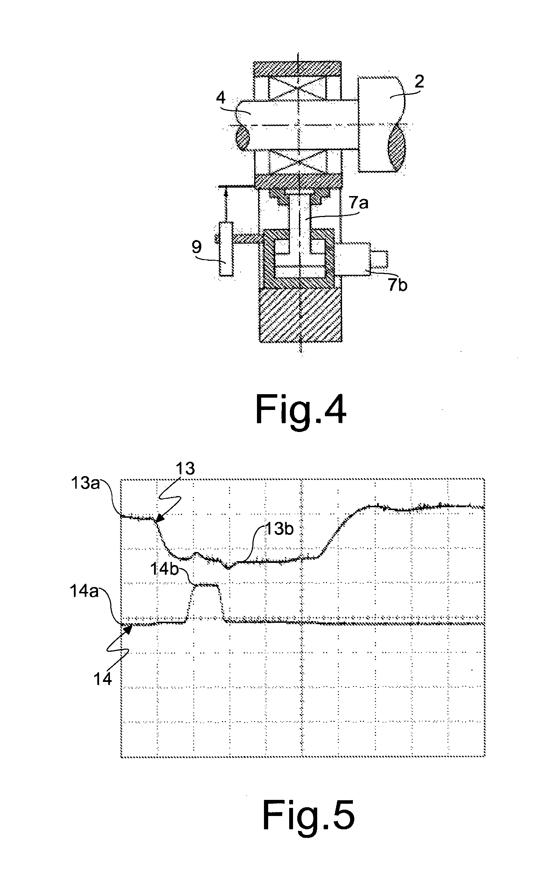

In the embodiment shown in the drawings, the lamination apparatus comprises two hydraulic actuators 7, 8 associated to the cylinder 2 and respectively arranged at the opposite ends of its shaft 4. Referring to figure 4, which shows the hydraulic actuator 7 only, each hydraulic actuator 7, 8 is provided with a double effect plunger 7a, 8a controlled by a servo-valve 7b, 8b allowing its movement in two opposite ways.

During operation of the lamination apparatus, the position of the shaft 4 of the cylinder 2 is detected in real time by a position sensor 9 connected to the control system, which, as it is well known, allows to keep the height of the gap 5 constant by operating in a closed loop mode on the supply pressure of the hydraulic actuators 7, 8. The control system can thus react in real time to height variations of the lamination gap 5 caused by uneven thickness of the coupled layers 6', 6", 6"' intended to form the multilayer 6.

According to the present invention, the calender of the hot lamination apparatus further comprises a detection sensor 10 arranged upstream of the lamination gap 5 defined between the cylinders 1, 2 of the calender relative to the movement direction of the layers 6', 6", 6"' and suitable to detect the passage of a splice 11 of the reinforcement textile ribbon 6" in the multilayer 6. The sensor 10 may be e.g. an optical sensor, e.g. a laser sensor, or a mechanical sensor e.g. provided with a contact member suitable to contact the multilayer 6 during lamination, adapted to detect superficial discontinuities characterizing the multilayer 6 at the portions comprising the splices 11.

Once detected the passage of a leading edge 11 a of a thickened splice portion, which indicates an incoming splice 11, the sensor 10 generates an alarm signal that is received as an input by circuit means (non shown) associated to the control system. The control system is then switched from the position control mode, which operates on the supply pressure of the hydraulic actuators 7, 8 in order to keep the height of the lamination gap 5 constant, to a pressure control mode, according to which the control of the height of the lamination gap 5 is temporarily interrupted and the pressure in the supply circuit of the hydraulic actuators 7, 8 is adjusted so as to minimize fluctuations of the movable cylinder 2 consequent to the passage of the splice 11.

In other words, in the pressure control mode, the pressure in the circuit supplying the hydraulic actuators 7, 8 is adjusted independent of the value of the height of the lamination gap 5.

As explained above, in fact, splices 11 between reinforcement textile ribbons are impulse-like disturbances of a substantially rectangular shape that generate thickness variations in the multilayer 6 being manufactured. These disturbances must therefore be managed by the control system in the minimum possible time in order to minimize production waste of the finished multilayer 6.

As shown in figures 1 to 3, the sensor 10 may be supported by an arm 12 suitably restrained to a frame of the calender and arranged at a distance from the cylinders 1, 2 suitable to allow to switch the control system from the position control mode to the pressure control mode sufficiently before the passage of a splice 11 through the lamination gap 5.

In the chart of figure 5, curve 13 represents the trend over time of the pressure in the supply circuit of the hydraulic actuators 7, 8, while curve 14 represents the trend over time of the height of the lamination gap 5 and thus, indirectly, the thickness of the multilayer 6.

According to the invention, in the pressure control mode the pressure in the supply circuit of the hydraulic actuators 7, 8 is reduced from a first value 13a, equal to the pressure value characterizing the position control mode, to a predefined second value 13b. The pressure in the supply circuit is e.g. equal to 200 bar in the position control mode, while in the pressure control mode is set to about 20 bar, whereby the ratio between the pressure values in the two control modes is 10:1.

As it may be seen, when the leading edge 11a of a splice 11 crosses the lamination gap 5, its height suddenly increases, i.e. in an impulsive way, from a first value 14a, substantially equal to the thickness of the multilayer 6, to a second value 14b substantially equal to the thickness of the multilayer at the splice 11.

Correspondingly, the pressure in the supply circuit of the hydraulic actuators 7, 8 undergoes variation, in particular a slight increase, and then decreases to the reduced value 13b initially set. This behavior derives from the fact that the sudden increase in the height of the lamination gap 5 causes a sudden compression of the actuators 7, 8 and therefore an overpressure in their supply circuit.

When a trailing edge 11b of the splice 11 passes beyond the lamination gap 5, the pressure in the supply circuit of the hydraulic actuators 7, 8 undergoes a new variation, in particular a slight decrease, due to the fact that the actuators 7, 8 suddenly bring the lamination gap 5 back to the original height by way of an extension movement that temporarily generates a pressure drop in their supply circuit.

Pressure fluctuations can be simply damped in a passive way by exploiting the supply circuit of the hydraulic actuators, which behaves like a "hydraulic lung", also considering the remarkable difference between the pressure in the position control mode and that in the pressure control mode.

Alternatively, the control system may carry out an active control in a closed loop mode, e.g. a proportional and derivative control, thus allowing to damp pressure fluctuations even more rapidly by acting on the supply pumps and servo-valves of the hydraulic actuators.

After the splice 11 has crossed the lamination gap 5, the control system is switched back to the position control mode, thus restoring the first value 13a of the supply pressure of the actuators 7, 8 and the control mode of the supply pressure based on the height of the lamination gap 5, detected in real time by the position sensor 9.

This new switching of the operation mode of the control system occurs after a predefined time interval calculated on the basis of the operation parameters of the lamination apparatus, in particular the feeding speed of the layers 6', 6", 6"' of the multilayer 6 and the known length of the splices 11. In the example shown in figure 5, the supply speed of the layers is about 80 m/min and the splices 11 have a length of about 200 mm. In this case, about 1 second after its switching to the pressure control mode, the control system is switched back to position control mode, which time is largely sufficient to ensure the complete passage of the splice 11 through the lamination gap 5, that takes about 0.15 seconds.

The embodiment of the invention herein described and illustrated is only an example susceptible of numerous variants. For example, the position of the splice detection sensor 10 relative to the lamination gap 5 may be adjusted on the basis of a desired time interval between the switching of the control system to the pressure control mode and the actual passage of the splice 11 through the lamination gap 5. Moreover, it is possible to use more than one sensor to detect an incoming splice 11, which may be particularly useful for the manufacturing of wide multilayers. It is also possible to use splice detection sensors downstream of the lamination cylinders 1, 2 with respect to the movement direction, thus allowing to restore the position control mode exactly when a splice 11 exits the lamination gap 5, thus avoiding the need for calculating time intervals based on the operation parameters of the lamination apparatus.

## Claims

1. A method for hot laminating a multilayer (6) comprising elastomeric ribbons (6', 6"') and a reinforcement ribbon (6") of a textile material having periodical splices (11), each splice (11) having, with respect to the movement direction of the reinforcement ribbon (6"), a leading edge (11a) and a trailing edge (11b) of a thickened splice tract of the reinforced ribbon (6"), in a calender comprising a pair of counter-rotating cylinders (1, 2) with parallel axes defining a lamination gap (5), whose height is controlled in a closed loop mode by a position control system comprising hydraulic actuators (7, 8) connected to a movable cylinder (2) of said pair of cylinders (1, 2), the method comprising the steps of:
- instrumentally detecting an incoming splice (11) of the reinforcement ribbon (6") upstream of the lamination gap (5) relative to said movement direction;
- switching the control system from the position control mode to a pressure control mode before the leading edge (11a) of the detected splice (11) reaches the lamination gap (5); and
- restoring the position control mode after the trailing edge (11b) of the splice (11) has crossed the lamination gap (5).

2. A lamination method according to claim 1, wherein in the pressure control mode the pressure within the hydraulic circuit supplying the actuators (7, 8) is reduced from a first value (13a), corresponding to the pressure value during normal operation in the position control mode, to a predefined second value (13b).

3. A lamination method according to claim 2, wherein the ratio between the pressures of the two control modes is 10:1.

4. A lamination method according to any one of the claims 1 to 3, wherein in the pressure control mode pressure fluctuations within the hydraulic circuit supplying the actuators (7, 8) are passively damped by the supplying circuit itself.

5. A lamination method according to any one of the claims 1 to 4, wherein the passage of the splice (11) is detected by a thickness detection sensor (10) upstream of the lamination gap (5) with respect to the movement direction of the elastomeric ribbons (6', 6"') and of the reinforcement ribbon (6") of the multilayer (6).

6. A lamination method according to claim 5, wherein said detection sensor (10) is an optical or mechanical sensor.

7. A calender for hot laminating a multilayer (6) comprising elastomeric ribbons (6', 6"') and a reinforcement ribbon (6") of a textile material having periodical splices (11), each splice (11) having, with respect to the movement direction of the reinforcement ribbon (6"), a leading edge (11a) and a trailing edge (11b) of a thickened splice tract of the reinforcement ribbon (6"), said calender comprising a pair of counter-rotating cylinders (1, 2) with parallel axes defining a lamination gap (5), heating members, temperature sensors, a temperature regulation system of the surface temperatures of the cylinders, a position control system comprising hydraulic actuators (7, 8) controlled in a closed loop mode by the control system and connected to a movable cylinder (2) of said pair of cylinders (1, 2) for regulating the height of the lamination gap (5), **characterized by** further comprising:
- a detection sensor (10) upstream of the lamination gap (5) and suitable to detect an incoming splice (11) of the reinforcement ribbon (6") upstream of the lamination gap (5) and to generate detection signals; and
- circuit means suitable to receive said detection signals as inputs and to switch said control system from a position control mode to a pressure control mode in response to an alarm signal from the splice detection sensor (10) before the leading edge (11a) of the splice (11) reaches the lamination gap (5), and suitable to restore the position control mode after the trailing edge (11b) of the splice (11) has crossed the lamination gap (5).

8. A calender according to claim 7, wherein said splice detection sensor (10) is an optical or mechanical sensor.

9. A calender according to claim 7 or 8, wherein the detection sensor (10) is supported by an arm (12) restrained to a frame of the calender.

10. An apparatus for hot laminating a multilayer (6) comprising elastomeric ribbons (6', 6"') coupled with reinforcement ribbons (6") of a textile material having periodical splices (11), said laminating apparatus comprising a calender according to any one of claims 7 to 9.

## Patentansprüche

1. Ein Verfahren zum Heißlaminieren einer Mehrfachschicht (6), umfassend Elastomerbänder (6',6"') und ein Verstärkungsband (6") aus einem textilen Material mit periodischen Verbindungsstellen (11), wobei jede Verbindungsstelle (11) in Bezug auf die Bewegungsrichtung des Verstärkungsbandes (6") eine führende Kante (11a) sowie eine nachfolgende Kante (11b) eines verdickten Verbindungsbereichs des Verstärkungsbandes (6") aufweist, in einem Kalander, umfassend ein Paar von entgegengesetzt rotierenden Zylindern (1, 2) mit parallelen Achsen, welche einen Laminierspalt (5) begrenzen, dessen Höhe in einer geschlossenen Schleife geregelt wird durch ein Positionsregelsystem mit hydraulischen Aktuatoren (7, 8), welche an einen beweglichen Zylinder (2) des besagten Zylinderpaares (1, 2) angekoppelt sind, wobei das Verfahren die folgenden Schritte umfasst:
- instrumentelles Erkennen eines stromaufwärts des Laminierspaltes (5) in Bezug auf die besagte Bewegungsrichtung einlaufenden Verbindungsbereichs (11) des Verstärkungsbandes (6");
- Umschalten des Regelsystems von dem Positionsregelmodus in einen Druckregelmodus, bevor die führende Kante (11a) des erkannten Verbindungsbereichs (11) den Laminierspalt (5) erreicht; und
- Wiederherstellen des Positionsregelmodus, nachdem die folgende Kante (11 b) des Verbindungsbereichs (11) den Laminierspalt (5) durchquert hat.

2. Ein Laminierverfahren nach Anspruch 1, wobei in dem Druckregelmodus der Druck innerhalb des die Aktuatoren (7, 8) speisenden, hydraulischen Kreises von einem ersten Wert (13a), welcher dem Druckwert während der normalen Betriebsweise in dem Positionsregelmodus entspricht, auf einen vorgegebenen, zweiten Wert (13b) reduziert wird.

3. Ein Laminierverfahren nach Anspruch 2, wobei das Verhältnis zwischen den Drücken der beiden Regelmodi 10 : 1 ist.

4. Ein Laminierverfahren nach einem der Ansprüche 1 bis 3, wobei in dem Druckregelmodus Fluktuationen des Drucks innerhalb des die Aktuatoren (7, 8) speisenden, hydraulischen Kreises durch den speisenden Kreis selbst passiv gedämpft werden.

5. Ein Laminierverfahren nach einem der Ansprüche 1 bis 4, wobei der Durchgang des Verbindungsbereichs (11) von einem Dicken-Erkennungs-Sensor (10) stromaufwärts des Laminierspaltes (5) in Bezug auf die besagte Bewegungsrichtung der Elastomerbänder (6',6"') und des Verstärkungsbandes (6") des Mehrfachschicht (6) erkannt wird.

6. Ein Laminierverfahren nach Anspruch 5, wobei der besagte ErkennungsSensor (10) ein optischer oder mechanischer Sensor ist.

7. Ein Kalander zum Heißlaminieren einer Mehrfachschicht (6), umfassend Elastomerbänder (6',6"') und ein Verstärkungsband (6") aus einem textilen Material mit periodischen Verbindungsstellen (11), wobei jede Verbindungsstelle (11) in Bezug auf die Bewegungsrichtung des Verstärkungsbandes (6") eine führende Kante (11a) sowie eine nachfolgende Kante (11b) eines verdickten Verbindungsbereichs des Verstärkungsbandes (6") aufweist, wobei der besagte Kalander ein Paar von entgegengesetzt rotierenden Zylindern (1, 2) mit parallelen Achsen umfasst, welche einen Laminierspalt (5) begrenzen, Heizelemente, Temperatursensoren, ein Temperatur-Regel-System für die Oberflächentemperaturen der Zylinder, ein Positionsregelsystem umfassend hydraulische Aktuatoren (7, 8), welche von das Regelsystem in einer Betriebsart mit geschlossener Schleife geregelt werden und an einen beweglichen Zylinder (2) des besagten Zylinderpaares (1, 2) angekoppelt sind, um die Höhe des Laminierspaltes (5) zu regeln, **dadurch gekennzeichnet, dass** er ferner umfasst:
- einen stromaufwärts des Laminierspaltes (5) angeordneten Erkennungssensor (10), tauglich zum Erkennen eines stromaufwärts des Laminierspaltes (5) einlaufenden Verbindungsbereichs (11) des Verstärkungsbandes (6") und zur Erzeugung von Erkennungssignalen; und
- Schaltkreiselemente, tauglich zum Empfang der besagten Erkennungssignale als Eingangssignale und zum Umschalten des besagten Regelsystems von einem Positionsregelmodus in einen Druckregelmodus als Reaktion auf ein Alarmsignal von dem Sensor (10) für die Erkennung eines Verbindungsbereichs, bevor die führende Kante (11a) des Verbindungsbereichs (11) den Laminierspalt (5) erreicht, und tauglich zum Wiederherstellen des Positionsregelmodus, nachdem die folgende Kante (11 b) des Verbindungsbereichs (11) den Laminierspalt (5) durchquert hat.

8. Ein Kalander nach Anspruch 7, wobei der Sensor (10) zur Erkennung eines Verbindungsbereichs ein optischer oder mechanischer Sensor ist.

9. Ein Kalander nach Anspruch 7 oder 8, wobei der Erkennungssensor von einem Arm (12) getragen wird, welcher an einem Rahmen des Kalanders gehalten ist.

10. Ein Gerät zum Heißlaminieren einer Mehrfachschicht (6), umfassend Elastomerbänder (6',6"') und ein Verstärkungsband (6") aus einem textilen Material mit periodischen Verbindungsstellen (11), wobei das besagte Laminiergerät einen Kalander nach einem der Ansprüche 7 bis 9 umfasst.

## Revendications

1. Procédé pour stratifier à chaud un élément multicouche (6) comprenant des rubans élastomères (6', 6"') et un ruban de renforcement (6") d'un matériau textile ayant des collures périodiques (11), chaque collure (11) ayant, par rapport à la direction de déplacement du ruban de renforcement (6"), un bord d'attaque (11a) et un bord de fuite (11b) d'une étendue de collure épaissie du ruban renforcé (6"), dans une calandre comprenant une paire de cylindres contrarotatifs (1, 2) avec des axes parallèles qui définissent un espace de stratification (5), dont la hauteur est régulée dans un mode en boucle fermée par un système de régulation de position comprenant des actionneurs hydrauliques (7, 8) raccordés à un cylindre mobile (2) de ladite paire de cylindres (1, 2), le procédé comprenant les étapes consistant à :
- détecter par voie instrumentale une collure entrante (11) du ruban de renforcement (6") en amont de l'espace de stratification (5) par rapport à ladite direction de déplacement ;
- faire passer le système de régulation du mode de régulation de position à un mode de régulation de pression avant que le bord d'attaque (1 la) de la collure (11) détectée n'atteigne l'espace de stratification (5) ; et
- rétablir le mode de régulation de position après que le bord de fuite (11 b) de la collure (11) a traversé l'espace de stratification (5).

2. Procédé de stratification selon la revendication 1, dans lequel, dans le mode de régulation de pression, la pression à l'intérieur du circuit hydraulique alimentant les actionneurs (7, 8) est réduite d'une première valeur (13a), correspondant à la valeur de pression pendant le fonctionnement normal en mode de régulation de position, à une seconde valeur (13b) prédéfinie.

3. Procédé de stratification selon la revendication 2, dans lequel le rapport entre les pressions des deux modes de régulation est de 10:1.

4. Procédé de stratification selon l'une quelconque des revendications 1 à 3, dans lequel, dans le mode de régulation de pression, des fluctuations de pression à l'intérieur du circuit hydraulique alimentant les actionneurs (7, 8) sont passivement amorties par le circuit d'alimentation lui-même.

5. Procédé de stratification selon l'une quelconque des revendications 1 à 4, dans lequel le passage de la collure (11) est détecté par un capteur de détection d'épaisseur (10) en amont de l'espace de stratification (5) par rapport à la direction de déplacement des rubans élastomères (6', 6"') et du ruban de renforcement (6") de l'élément multicouche (6).

6. Procédé de stratification selon la revendication 5, dans lequel ledit capteur de détection (10) est un capteur optique ou mécanique.

7. Calandre pour stratifier à chaud un élément multicouche (6) comprend des rubans élastomères (6', 6"') et un ruban de renforcement (6") d'un matériau textile ayant des collures (11) périodiques, chaque collure (11) ayant, par rapport à la direction de déplacement du ruban de renforcement (6"), un bord d'attaque (11a) et un bord de fuite (11b) d'une étendue de collure épaissie du ruban de renforcement (6"), ladite calandre comprenant une paire de cylindres contrarotatifs (1, 2) avec des axes parallèles qui définissent un espace de stratification (5), des éléments de chauffage, des capteurs de température, un système de régulation de température des températures de surface des cylindres, un système de régulation de position comprenant des actionneurs hydrauliques (7, 8) régulés dans un mode de boucle fermée par le système de régulation et raccordés à un cylindre mobile (2) de ladite paire de cylindres (1, 2) pour réguler la hauteur de l'espace de stratification (5), **caractérisé en ce qu'**elle comprend en outre :
- un capteur de détection (10) en amont de l'espace de stratification (5) et approprié pour détecter une collure (11) entrante du ruban de renforcement (6") en amont de l'espace de stratification (5) et pour générer des signaux de détection ; et
- des moyens de circuit appropriés pour recevoir lesdits signaux de détection en tant qu'entrée et pour faire passer ledit système de régulation d'un mode de régulation de position à un mode de régulation de pression en réponse à un signal d'alarme provenant du capteur de détection de collure (10) avant que le bord d'attaque (11 a) de la collure (11) n'atteigne l'espace de stratification (5), et approprié pour rétablir le mode de régulation de position après que le bord de fuite (11 b) de la collure (11) a traversé l'espace de stratification (5).

8. Calandre selon la revendication 7, dans lequel ledit capteur de détection de collure (10) est un capteur optique ou mécanique.

9. Calandre selon la revendication 7 ou 8, dans lequel le capteur de détection (10) est supporté par un bras (12) retenu sur un bâti de la calandre.

10. Appareil pour stratifier à chaud un élément multicouche (6) comprenant des rubans élastomères (6', 6"') couplés avec des rubans de renforcement (6") d'un matériau textile ayant des collures (11) périodiques, ledit appareil de stratification comprenant une calandre selon l'une quelconque des revendications 7 à 9.
